# EUROPÄISCHE PATENTANMELDUNG

(11) **EP 4 613 655 A1**
(43) Veröffentlichungstag der Anmeldung: **10.09.2025**
(21) Anmeldenummer: 25161628.0
(22) Anmeldetag: 04.03.2025
(51) Int. Cl.: B65B 3/12, B65B 3/26, B65B 3/36, B65B 39/00, B65B 39/12, B65B 65/00, G01F 11/02, G01F 11/38, B67C 3/20, G01F 15/00, B67C 3/22, B67C 3/26

(54) **DOSIERVORRICHTUNG MIT EINEM BEWEGLICHEN FÜLLELEMENT, PRODUKTIONSANLAGE MIT EINER DERARTIGEN DOSIERVORRICHTUNG SOWIE VERFAHREN ZU EINEM BETRIEB EINER DOSIERVORRICHTUNG MIT EINEM BEWEGLICHEN FÜLLELEMENT**

(30) Priorität: 08.03.2024 DE 102024106655
(71) Anmelder: Ampack GmbH, 86343 Königsbrunn (DE)
(72) Erfinder: MÜLLER, Detlef, 74523 Schwäbisch Hall (DE)
(74) Vertreter: Daub, Thomas

(57) **Zusammenfassung**

Die Erfindung geht aus von einer Dosiervorrichtung zu einer Dosierung von flüssigen und/oder pastösen Produkten, insbesondere Lebensmitteln, mit zumindest einer Dosiereinheit (12), die zumindest ein beweglich gelagertes Füllelement (14), insbesondere Füllrohr, das zu einem Befüllen zumindest eines Behälters (16) mit einem flüssigen und/oder pastösen Produkt zumindest eine Ausgabeöffnung (18) aufweist, und die zumindest ein Gehäuse (20), insbesondere Ventilgehäuse, umfasst, das einen Aufnahmeraum (22) für das flüssige und/oder pastöse Produkt begrenzt.

Es wird vorgeschlagen, dass das Füllelement (14) in dem Gehäuse (20) beweglich gelagert ist.

## Beschreibung

### Stand der Technik

Die Erfindung betrifft eine Dosiervorrichtung zu einer Dosierung von flüssigen und/oder pastösen Produkten, mit zumindest einer Dosiereinheit, die zumindest ein beweglich gelagertes Füllelement, das zu einem Befüllen zumindest eines Behälters mit einem flüssigen und/oder pastösen Produkt zumindest eine Ausgabeöffnung aufweist, und die zumindest ein Gehäuse umfasst, das einen Aufnahmeraum für das flüssige und/oder pastöse Produkt begrenzt.

Bei bekannten Dosiervorrichtungen erfolgt meist eine statische Anordnung eines als Füllrohr ausgebildeten Füllelements, woraus sich insbesondere beim Beginn eines Dosiervorgangs eine hohe Fallhöhe für zu dosierende flüssige und/oder pastöse Produkte in zu befüllende Behälter ergeben kann und daraus folgend eine starke Schaumbildung im Behälter erfolgen kann. Zudem erfolgt bei den bekannten Dosiervorrichtungen meist ein vertikaler Austritt der zu dosierenden flüssigen und/oder pastösen Produkte aus dem Füllelement, was ebenso zu einer starken Schaumbildung beitragen kann. Insbesondere die üblicherweise nach unten offenen Füllelemente neigen insbesondere unter aseptischen Bedingungen dazu, dass die zu dosierenden flüssigen und/oder pastösen Produkte am Füllelement antrocknen, woraus eine Querschnittsverengung einer Ausgabeöffnung des Füllelements resultieren kann, die wiederum zu einem Leistungsverlust und einem Nachtropfen führen kann. Zudem können die nach unten offenen Füllelemente eine Außenspülung mit Sterilwasser erschweren bzw. können diese zu ungewollten Nebeneffekten führen, wie beispielsweise zu einem ungewollten Vermischen von Sterilwasser mit zu dosierenden flüssigen und/oder pastösen Produkten. Des Weiteren ist es beispielsweise bei aseptischen Dosiervorgängen aus hygienischen Gründen sehr ungünstig die zu befüllenden Behälter zum Füllelement zu bewegen, da dadurch Hygienezonenverletzungen eintreten können.

Aus DE 695 29 287 T2 ist beispielsweise bereits eine Dosiervorrichtung zu einer Dosierung von flüssigen und/oder pastösen Produkten, insbesondere Lebensmitteln, bekannt, die zumindest eine Dosiereinheit, die zumindest ein beweglich gelagertes Füllelement, insbesondere Füllrohr, das zu einem Befüllen zumindest eines Behälters mit einem flüssigen und/oder pastösen Produkt zumindest eine Ausgabeöffnung aufweist, und die zumindest ein Gehäuse umfasst, das einen Aufnahmeraum für das flüssige und/oder pastöse Produkt begrenzt. Das Gehäuse ist bei der bekannten Dosiervorrichtung über eine flexible Leitung mit dem Füllelement verbunden, das außerhalb des Gehäuses angeordnet ist und relativ zu diesem beweglich gelagert ist, um in den Behälter hinein bewegt zu werden. Das Füllelement weist zur Ausgabe des zu dosierenden flüssigen und/oder pastösen Produkts eine vertikal ausgerichtete Ausgabeöffnung auf, die durch einen parallel zu einer Bewegungsachse des Füllelements verlaufenden Auslasskanal des Füllelements gebildet wird. Bei der bekannten Dosiervorrichtung aus der DE 695 29 287 T2 sind viele relativ zueinander bewegliche Bauteile vorhanden, was zu einem technisch komplexen Aufbau der Dosiervorrichtung führt. Zudem können durch die bekannte Dosiervorrichtung aus der DE 695 29 287 T2 auch nicht alle oben genannten Nachteile behoben werden.

Die Aufgabe der Erfindung besteht insbesondere darin, eine gattungsgemäße Dosiervorrichtung, eine gattungsgemäße Produktionsanlage und ein gattungsgemäßes Verfahren zu einem Betrieb einer Dosiervorrichtung mit verbesserten Eigenschaften hinsichtlich einer einfachen und zuverlässigen Reinigungsmöglichkeit, einer geringen Komplexität im Aufbau, einem präzisen Dosieren von Produkten und einer hohen Abfüllleistung bereitzustellen. Die Aufgabe wird erfindungsgemäß durch die Merkmale des Anspruchs 1, 7 bzw. 8 gelöst, während vorteilhafte Ausgestaltungen und Weiterbildungen der Erfindung den Unteransprüchen entnommen werden können.

### Offenbarung der Erfindung

Die Erfindung geht aus von einer Dosiervorrichtung zu einer Dosierung von flüssigen und/oder pastösen Produkten, insbesondere Lebensmitteln, mit zumindest einer Dosiereinheit, die zumindest ein beweglich gelagertes Füllelement, insbesondere Füllrohr, das zu einem Befüllen zumindest eines Behälters mit einem flüssigen und/oder pastösen Produkt zumindest eine Ausgabeöffnung aufweist, und die zumindest ein Gehäuse, insbesondere Ventilgehäuse, umfasst, das einen Aufnahmeraum für das flüssige und/oder pastöse Produkt begrenzt.

Es wird vorgeschlagen, dass das Füllelement in dem Gehäuse beweglich gelagert ist. Durch die erfindungsgemäße Ausgestaltung der Dosiervorrichtung kann vorteilhaft eine einfache und zuverlässige Reinigungsmöglichkeit, insbesondere Außenreinigung, der Dosiereinheit ermöglicht werden. Es kann vorteilhaft eine geringe Komplexität im Aufbau der Dosiereinheit realisiert werden, die mit wenigen beweglichen Bauteilen realisierbar ist. Zudem kann vorteilhaft ein präzises Dosieren von flüssigen und/oder pastösen Produkten ermöglicht werden. Es kann vorteilhaft durch das beweglich gelagerte Füllelement eine mögliche Fallhöhe eines zu dosierenden flüssigen und/oder pastösen Produkts in einen zu befüllenden Behälter realisiert werden, da das Füllelement in den Behälter einführbar ist. Es kann vorteilhaft einer starken Schaumbildung in dem Behälter entgegengewirkt werden, insbesondere auch weiter vorteilhaft durch eine winklige Ausrichtung eines die Ausgabeöffnung bildenden Auslasskanals des Füllelements. Es kann vorteilhaft eine hohe Produktionsleistung realisiert werden, insbesondere da nicht auf ein Abklingen einer Schaumbildung gewartet werden muss oder eine zu Gunsten einer geringen Schaumbildung geringe Austragsleistung eingestellt werden muss, sondern ein Dosiervorgang vorteilhaft kontinuierlich mit einer hohen Austragsleistung durchgeführt werden kann. Zudem kann vorteilhaft infolge einer Bewegung des Füllelements, insbesondere der Ausgabeöffnung, in das Gehäuse hinein, einem Antrocknen von zu dosierenden flüssigen und/oder pastösen Produkten an dem Füllelement entgegengewirkt werden. Ferner kann vorteilhaft eine Levelfüllung ohne kritische Beeinflussung einer aseptischen Umgebung realisiert werden. Zudem kann vorteilhaft infolge eines Entfalls einer Notwendigkeit einer vertikalen Behälterbewegung ein großes Einsatzgebiet für die erfindungsgemäße Dosiervorrichtung für unterschiedliche Arten von Behältern, wie beispielsweise Flaschen, Becher, Pouches, Kanister o. dgl., ermöglicht werden. Es kann vorteilhaft eine prozesssichere Dosierung von flüssigen und/oder pastösen Produkten ermöglicht werden.

Die Dosiervorrichtung dient insbesondere zu einer Dosierung von flüssigen und/oder pastösen Produkten, wobei die Dosiervorrichtung insbesondere dazu vorgesehen ist, das Produkt in einer definierten Menge, insbesondere in einen dafür vorgesehenen Behälter, insbesondere Verkaufsbehälter, auszubringen. Die Dosiervorrichtung kann insbesondere ein oder mehrere Dosiereinheiten umfassen. Die zumindest eine Dosiereinheit ist insbesondere von einem Doseur gebildet. Die Dosiereinheit dient insbesondere zu einem direkten Ausbringen des Produkts, insbesondere durch die Ausgabeöffnung des Füllelements, in einen dafür vorgesehenen Behälter. Die Dosiereinheit umfasst vorzugsweise zumindest eine Dosierpumpe zu einer Förderung der flüssigen und/oder pastösen Produkte. Die Dosiereinheit kann auch eine Vielzahl an Dosierpumpen aufweisen, die vorzugsweise einzeln zu einer Förderung der flüssigen und/oder pastösen Produkte vorgesehen sind. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Bevorzugt weist die Dosiereinheit zumindest ein, insbesondere zumindest einen Ventilschieber umfassendes, Umschaltventil zu einem Umschalten zwischen einem Ansaugen und einem Ausstoßen auf. Mittels des Umschaltventils kann insbesondere ein Öffnen oder Schließen einer Produktzuführöffnung der Dosiereinheit erfolgen, insbesondere um entweder mittels der Dosierpumpe eine neue Produktmenge anzusaugen oder um mittels der Dosierpumpe die bereits angesaugte Produktmenge zum Füllelement, insbesondere durch das Füllelement, zu fördern. Die Dosierpumpe und/oder das Umschaltventil ist/sind insbesondere servogesteuert. Alternativ wären auch Antriebe ohne Servoantriebe denkbar, die eine konstante Kraft liefern, wie beispielsweise pneumatische Antriebe, über mechanische Kurven gesteuerte Antriebe o. dgl. Eine Ansteuerung des Umschaltventils und/oder der Dosierpumpe erfolgt vorzugsweise auf eine, einem Fachmann bereits bekannte Art und Weise.

Die Dosierpumpe/n ist/sind vorzugsweise über eine, insbesondere individuelle, Zuführleitung der Dosiervorrichtung mit einer Tankeinheit der Dosiervorrichtung verbunden. Die Tankeinheit umfasst insbesondere zumindest ein Tankelement, in dem die oder das flüssige/n oder pastöse/n Produkt/e anordenbar sind/ist, bevor die oder das flüssige/n oder pastöse/n Produkt/e durch die Dosierpumpe angesaugt werden/wird. Denkbar ist auch, dass die Tankeinheit eine Vielzahl an Tankelementen umfasst, wobei in den einzelnen Tankelementen unterschiedliche Produkte anordenbar sind, die mittels der Dosierpumpe/n in Behälter förderbar sind, um insbesondere eine so genannte sortierte Abfüllung (ABAB oder ABCD) zu ermöglichen. Es ist denkbar, dass jeder Dosierpumpe ein einzelnes Tankelement der Tankeinheit zugeordnet ist, dass jeder Dosierpumpe eine Vielzahl an Tankelementen zugeordnet ist oder dass allen Dosierpumpen ein einzelnes Tankelement zugeordnet ist. Als weitere Ausgestaltung ist insbesondere auch eine Ausgestaltung der Dosiereinheit als eine Art Tankdoseur denkbar, bei der die Dosierpumpe und/oder die Dosiereinheit direkt in einem Tankelement angeordnet sind, vorzugsweise um eine separate fluidische Verbindung einsparen zu können. Weitere, einem Fachmann als sinnvoll erscheinende Ausgestaltungen, Aufteilungen und/oder fluidische Verbindungen der Tankeinheit und der Dosiereinheit sind ebenfalls denkbar. Bevorzugt wird ein zu dosierendes Produkt mittels der Dosierpumpe auf eine, einem Fachmann bereits bekannte Art und Weise aus dem Tankelement über die Produktzuführöffnung in das Gehäuse gefördert. Eine Förderrichtung der Dosierpumpe, entlang derer das Produkt mittels der Dosierpumpe förderbar ist, verläuft bevorzugt ausgehend vom Tankelement über die Zuführleitung in Richtung der Dosierpumpe bis zu einer Saugseite, insbesondere bis zu einem Produkteinlass der Dosierpumpe, und weiter von der Saugseite zur Druckseite, insbesondere bis zu einer Ausgabeöffnung des Füllelements, über die das Produkt in einen Behälter, insbesondere Becher, Flasche o. dgl., einfüllbar ist. Es ist denkbar, dass die Dosiervorrichtung zumindest eine Drucküberwachungseinheit zu einer Erfassung von zumindest einer Druckkenngröße umfasst, insbesondere um vorteilhaft eine automatisierte Überwachung einer Veränderung von Produkteigenschaften von zu dosierenden Produkten zu ermöglichen. Vorzugsweise ist die Drucküberwachungseinheit entlang der Förderrichtung der Dosierpumpe, insbesondere vollständig, auf der Saugseite der Dosierpumpe angeordnet. Bevorzugt ist die Drucküberwachungseinheit entlang der Förderrichtung der Dosierpumpe in ihrer Gesamtheit auf der Saugseite der Dosierpumpe angeordnet. Ferner ist denkbar, dass die Dosiervorrichtung zu einer Konsistenzermittlung des Produkts eine Sensoreinheit, insbesondere ein Viskosimeter, aufweist, die, insbesondere das, mit einer Recheneinheit der Dosiervorrichtung übertragungstechnisch, insbesondere zu einer Übertragung von elektronischen Daten, verbunden ist. Zudem kann die Dosiervorrichtung weitere, einem Fachmann als sinnvoll erscheinende Einheiten, wie beispielsweise eine Durchflusserfassungseinheit o. dgl., aufweisen, die zu einer Steuerung oder Regelung der Dosiervorrichtung Anwendung finden können.

Das Füllelement ist bevorzugt als Füllrohr ausgebildet. Das Füllelement kann Teil eines Ventilschiebers der Dosiereinheit sein oder diesen bilden. Das Füllelement umfasst vorzugsweise einen Innenkanal oder mehrere Innenkanäle zu einer Führung des zu dosierenden flüssigen und/oder pastösen Produkts, der oder die vorzugsweise fluidtechnisch mit der Ausgabeöffnung zusammenwirken, insbesondere direkt an die Ausgabeöffnung angrenzt/angrenzen. Das Füllelement kann eine einzelne Ausgabeöffnung oder eine Vielzahl an Ausgabeöffnungen aufweisen. Bevorzugt ist/sind die Ausgabeöffnung/en an einer Mantelfläche des Füllelements angeordnet. Das Füllelement ist vorzugsweise translatorisch beweglich im Gehäuse gelagert. Eine Bewegungsachse des Füllelements verläuft bevorzugt zumindest im Wesentlichen parallel zu einer Längsachse des Gehäuses und/oder zu einer Bewegungsachse eines Dosierkolbens der Dosierpumpe. Bevorzugt verläuft die Bewegungsachse des Füllelements zumindest im Wesentlichen parallel zu einer Vertikalachse. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Es ist jedoch auch denkbar, dass das Füllelement alternativ oder zusätzlich entlang und/oder um eine andere Bewegungsachse in dem Gehäuse beweglich gelagert ist. Bevorzugt ist das Füllelement derart beweglich in dem Gehäuse gelagert, dass zumindest die Ausgabeöffnung infolge einer Bewegung des Füllelements relativ zum Gehäuse aus dem Gehäuse herausbewegbar ist. Das Gehäuse ist vorzugsweise als Ventilgehäuse eines Füllventils der Dosiereinheit ausgebildet. Das Gehäuse kann getrennt zu einem Pumpengehäuse der Dosiereinheit angeordnet oder ausgebildet sein und fluidtechnisch mit diesem verbunden sein oder das Gehäuse kann direkt angrenzend an dem Pumpengehäuse angeordnet sein, insbesondere derart, dass das Pumpengehäuse und das Gehäuse zusammen den Aufnahmeraum für das flüssige und/oder pastöse Produkt begrenzen. Weitere, einem Fachmann als sinnvoll erscheinende Ausgestaltungen und/oder Anordnungen des Gehäuses und/oder des Pumpengehäuses sind ebenfalls denkbar.

Ferner wird vorgeschlagen, dass die Dosiereinheit zumindest ein im Gehäuse angeordnetes Führungselement zumindest zu einer Führung einer, insbesondere translatorischen, Bewegung des Füllelements aufweist, das, insbesondere dichtend, mit zumindest einer zumindest eine Zulauföffnung des Füllelements begrenzenden Außenseite und/oder Kante des Füllelements, insbesondere in Abhängigkeit von einer axialen Position des Füllelements relativ zum Führungselement, zusammenwirkt. Vorzugsweise ist die Zulauföffnung über den Innenkanal/die Innenkanäle mit der Ausgabeöffnung verbunden. Bevorzugt erstreckt/erstrecken sich der Innenkanal/die Innenkanäle ausgehend von der Zulauföffnung bis hin zur Ausgabeöffnung. Denkbar ist auch, dass bei einer Ausgestaltung des Füllelements mit mehreren Innenkanälen jedem Innenkanal eine eigenständige Zulauföffnung und/oder Ausgabeöffnung des Füllelements zugeordnet ist. Das Führungselement ist bevorzugt als Linearführungselement ausgebildet. Vorzugsweise ist das Führungselement an einer Innenwand des Gehäuses angeordnet, insbesondere einteilig mit der Innenwand ausgebildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das Führungselement ist bevorzugt dazu vorgesehen, in Abhängigkeit von einer axialen Position des Füllelements relativ zum Führungselement, die Zulauföffnung des Füllelements zu öffnen oder zu schließen. Vorzugsweise überdeckt das Führungselement in zumindest einer axialen Position des Füllelements relativ zum Führungselement die Zulauföffnung vollständig. Bevorzugt überdeckt das Führungselement in zumindest einer axialen Position des Füllelements relativ zum Führungselement die Zulauföffnung vollständig, in der die Ausgabeöffnung, insbesondere vollständig, innerhalb des Gehäuses angeordnet ist. Eine Passung zwischen dem Führungselement und dem Füllelement ist vorzugsweise derart gewählt, dass eine translatorische Bewegung des Füllelements relativ zum Führungselement erfolgen kann, insbesondere wobei zusätzlich eine Dichtungsfunktion mittels der Passung realisierbar ist. Beispielsweise ist denkbar, dass ein minimaler Produktfilm auf einer Außenseite des Füllelements vorhanden ist, der durch die Bewegung relativ zum Führungselement durch eine Kante oder eine Innenwand abstreifbar ist o. dgl., so dass dadurch beispielsweise eine Dichtfunktion erzeugbar ist. Alternativ oder zusätzlich ist denkbar, dass das Führungselement beispielsweise einen konischen Innenbereich aufweist, in den ein konischer Außenbereich des Füllelements hineinbewegbar ist, um eine Dichtfunktion zu ermöglichen. Alternativ oder zusätzlich ist ferner denkbar, dass das Führungselement an einer dem Füllelement zugewandten Innenseite des Führungselements eine oder mehrere Dichtungserhebungen aufweist, die gleitend mit der Außenseite des Füllelements zusammenwirkt/zusammenwirken, um eine Dichtungsfunktion zu realisieren. Denkbar ist auch, dass die Dosiereinheit alternativ oder zusätzlich an einer dem Füllelement zugewandten Innenseite des Führungselements zumindest ein Dichtungselement umfasst, um eine Dichtungsfunktion zu realisieren. Das Dichtungselement kann als Kunststoffdichtung, als Metalldichtung, als Gummidichtung oder als sonstige, einem Fachmann als sinnvoll erscheinende Dichtung ausgebildet sein. Die Zulauföffnung ist bevorzugt bezogen auf eine maximale Längserstreckung des Füllelements in einem mittleren Bereich des Füllelements angeordnet. Es ist jedoch auch denkbar, dass die Zulauföffnung an einer anderen, einem Fachmann als sinnvoll erscheinenden Position am Füllelement angeordnet ist. Die Ausgabeöffnung ist vorzugsweise an einem Ende des Füllelements angeordnet, insbesondere an einem dem Führungselement und/oder der Dosierpumpe abgewandten Ende des Füllelements. Durch die erfindungsgemäße Ausgestaltung kann vorteilhaft eine präzise Bewegungsführung des Füllelements erreicht werden. Zudem kann konstruktiv einfach eine Öffnungs- oder Schließfunktion der Zulauföffnung realisiert werden. Es kann vorteilhaft eine geringe Komplexität im Aufbau der Dosiereinheit realisiert werden, die mit wenigen beweglichen Bauteilen realisierbar ist. Zudem kann vorteilhaft durch eine Verschlussmöglichkeit der Zulauföffnung zusätzlich zu einer Bewegung des Füllelements, insbesondere der Ausgabeöffnung, in das Gehäuse hinein, einem Antrocknen von zu dosierenden flüssigen und/oder pastösen Produkten an dem Füllelement entgegengewirkt werden. Es kann vorteilhaft eine prozesssichere Dosierung von flüssigen und/oder pastösen Produkten ermöglicht werden.

Des Weiteren wird vorgeschlagen, dass die Dosiereinheit zumindest ein im Gehäuse angeordnetes, insbesondere das bereits zuvor genannte, Führungselement zumindest zu einer Führung einer, insbesondere translatorischen, Bewegung des Füllelements aufweist, wobei das Gehäuse zwischen einer Innenwand des Gehäuses und dem Führungselement zumindest einen Kanal aufweist, der, insbesondere in Abhängigkeit von einer axialen Position des Füllelements relativ zum Führungselement, zu einer Zuführung des flüssigen und/oder pastösen Produkts zu einer, insbesondere der bereits zuvor genannten, Zulauföffnung des Füllelements vorgesehen ist. Bevorzugt ist infolge einer translatorischen Bewegung des Füllelements relativ zum Führungselement die Zulauföffnung aus dem Führungselement heraus bewegbar, insbesondere um eine Zuführung des flüssigen und/oder pastösen Produkts durch den Kanal zur Zulauföffnung zu realisieren. Das Gehäuse kann einen, insbesondere kreisringsektorförmigen, Kanal oder eine Vielzahl an Kanälen aufweisen, der/die zwischen der Innenwand des Gehäuses und dem Führungselement angeordnet ist/sind. Bei einer Ausgestaltung des Gehäuses mit einer Vielzahl an Kanälen, sind die Kanäle bevorzugt gleichmäßig um das Führungselement verteilt angeordnet. Andere, einem Fachmann als sinnvoll erscheinende Ausgestaltungen sind ebenfalls denkbar. Durch die erfindungsgemäße Ausgestaltung kann vorteilhaft eine zuverlässige Zuführung von flüssigen und/oder pastösen Produkten zur Zulauföffnung realisiert werden, wobei vorteilhaft eine präzise Bewegungsführung des Füllelements erreicht werden kann. Es kann vorteilhaft eine geringe Komplexität im Aufbau der Dosiereinheit realisiert werden, die mit wenigen beweglichen Bauteilen realisierbar ist. Zudem kann vorteilhaft durch eine Verschlussmöglichkeit der Zulauföffnung zusätzlich zu einer Bewegung des Füllelements, insbesondere der Ausgabeöffnung, in das Gehäuse hinein, einem Antrocknen von zu dosierenden flüssigen und/oder pastösen Produkten an dem Füllelement entgegengewirkt werden. Es kann vorteilhaft eine prozesssichere Dosierung von flüssigen und/oder pastösen Produkten ermöglicht werden.

Ferner wird vorgeschlagen, dass das Gehäuse zumindest eine Durchführöffnung aufweist, durch die das Füllelement derart aus dem Gehäuse herausbewegbar ist, dass zumindest die Ausgabeöffnung des Füllelements außerhalb des Aufnahmeraums angeordnet ist, insbesondere wobei ein die Durchführöffnung begrenzender Teilbereich des Gehäuses dichtend mit einer Außenseite und/oder Kante des Füllelements, insbesondere in Abhängigkeit von einer axialen Position des Füllelements relativ zur Durchführöffnung, zusammenwirkt. Die Durchführöffnung ist vorzugsweise an einer Unterseite des Gehäuses angeordnet. Bevorzugt ist die Durchführöffnung an einer dem Führungselement abgewandten Seite des Gehäuses angeordnet. Eine Passung zwischen dem die Durchführöffnung begrenzenden Teilbereich des Gehäuses und dem Füllelement ist vorzugsweise derart gewählt, dass eine translatorische Bewegung des Füllelements relativ zum Gehäuse erfolgen kann, insbesondere wobei zusätzlich eine Dichtungsfunktion mittels der Passung realisierbar ist. Alternativ oder zusätzlich ist denkbar, dass der die Durchführöffnung begrenzende Teilbereich des Gehäuses beispielsweise einen konischen Innenbereich aufweist, in den ein konischer Außenbereich des Füllelements hineinbewegbar ist, um eine Dichtfunktion zu ermöglichen. Alternativ oder zusätzlich ist ferner denkbar, dass der die Durchführöffnung begrenzende Teilbereich des Gehäuses an einer dem Füllelement zugewandten Innenseite des die Durchführöffnung begrenzenden Teilbereichs des Gehäuses eine oder mehrere Dichtungserhebungen aufweist, die gleitend mit der Außenseite des Füllelements zusammenwirkt/zusammenwirken, um eine Dichtungsfunktion zu realisieren. Denkbar ist auch, dass die Dosiereinheit alternativ oder zusätzlich an einer dem Füllelement zugewandten Innenseite des die Durchführöffnung begrenzenden Teilbereichs des Gehäuses zumindest ein Dichtungselement umfasst, um eine Dichtungsfunktion zu realisieren. Das Dichtungselement kann als Kunststoffdichtung, als Metalldichtung, als Gummidichtung oder als sonstige, einem Fachmann als sinnvoll erscheinende Dichtung ausgebildet sein. Durch die erfindungsgemäße Ausgestaltung der Dosiervorrichtung kann vorteilhaft infolge einer Bewegung des Füllelements, insbesondere der Ausgabeöffnung, in das Gehäuse hinein, einem Antrocknen von zu dosierenden flüssigen und/oder pastösen Produkten an dem Füllelement entgegengewirkt werden. Zudem kann vorteilhaft eine einfache und zuverlässige Reinigungsmöglichkeit, insbesondere Außenreinigung, der Dosiereinheit ermöglicht werden. Es kann vorteilhaft eine geringe Komplexität im Aufbau der Dosiereinheit realisiert werden, die mit wenigen beweglichen Bauteilen realisierbar ist. Zudem kann vorteilhaft ein präzises Dosieren von flüssigen und/oder pastösen Produkten ermöglicht werden. Es kann vorteilhaft eine prozesssichere Dosierung von flüssigen und/oder pastösen Produkten ermöglicht werden.

Es wird weiter vorgeschlagen, dass die Dosiereinheit zumindest ein, insbesondere in einem, insbesondere in dem bereits zuvor genannten, Pumpengehäuse der Dosiereinheit, beweglich gelagertes Verschlusselement, insbesondere Ventilschieber, zu einem Öffnen oder Schließen einer, insbesondere der bereits zuvor genannten, Produktzuführöffnung der Dosiereinheit aufweist, wobei das Füllelement mit dem Verschlusselement bewegungsgekoppelt ist, insbesondere mittels einer, vorzugsweise lösbaren, formschlüssigen Verbindung mit dem Verschlusselement verbunden ist. Vorzugsweise ist das Füllelement, insbesondere mit einem der Ausgabeöffnung abgewandten und/oder der Dosierpumpe zugewandten Ende des Füllelements, über eine formschlüssige Verbindung, wie beispielsweise einer Spundung, einer Schwalbenschwanzverbindung o. dgl., mit dem Verschlusselement verbunden. Denkbar ist auch, dass das Füllelement einteilig mit dem Verschlusselement ausgebildet ist. Eine Bewegungsachse des Verschlusselements verläuft bevorzugt zumindest im Wesentlichen parallel, ganz besonders bevorzugt koaxial, zur Bewegungsachse des Füllelements. Bevorzugt ist das Verschlusselement als Ventilschieber des Umschaltventils zu einem Umschalten zwischen einem Ansaugen und einem Ausstoßen ausgebildet. Das Füllelement und das Verschlusselement sind vorzugsweise derart miteinander bewegungsgekoppelt, dass eine synchrone Bewegung des Füllelements und des Verschlusselements erfolgen kann, insbesondere erfolgt. Es ist jedoch auch denkbar, dass das Füllelement und das Verschlusselement derart miteinander bewegungsgekoppelt sind, dass eine versetzte Bewegung des Füllelements und des Verschlusselements erfolgen kann, insbesondere erfolgt. Weitere, einem Fachmann als sinnvoll erscheinende Ausgestaltungen einer Verbindung des Füllelements und des Verschlusselements sind ebenfalls denkbar. Durch die erfindungsgemäße Ausgestaltung der Dosiervorrichtung kann vorteilhaft eine geringe Komplexität im Aufbau der Dosiereinheit realisiert werden, die mit wenigen beweglichen Bauteilen realisierbar ist. Zudem kann vorteilhaft ein präzises Dosieren von flüssigen und/oder pastösen Produkten ermöglicht werden. Es kann vorteilhaft eine prozesssichere Dosierung von flüssigen und/oder pastösen Produkten ermöglicht werden.

Ferner wird vorgeschlagen, dass die infolge einer Bewegung des Füllelements aus dem Gehäuse herausbewegbare Ausgabeöffnung des Füllelements durch einen relativ zu einer, insbesondere der bereits zuvor genannten, Bewegungsachse des Füllelements geneigten Auslasskanal des Füllelements gebildet wird, wobei insbesondere dessen Mittelachse einen von 90° und 180° verschiedenen Winkel mit der Bewegungsachse des Füllelements einschließt. Das Füllelement kann, insbesondere in Abhängigkeit von einer Anzahl an Ausgabeöffnungen, einen oder mehrere Auslasskanäle umfassen, der/die die Ausgabeöffnung/en bilden. Die Mittelachse des Auslasskanals schließt vorzugsweise mit der Bewegungsachse des Füllelements einen Winkel ein, der insbesondere kleiner ist als 90°, bevorzugt kleiner ist als 75° und ganz bevorzugt kleiner ist als 60°. Bevorzugt weist der Winkel, den die Mittelachse des Auslasskanals mit der Bewegungsachse des Füllelements einschließt, einen Wert aus einem Wertebereich von 15° bis 55°, insbesondere von 30° bis 50°, auf. Eine Hauptaustrittsrichtung eines zu dosierenden flüssigen und/oder pastösen Produkts, das durch die Ausgabeöffnung ausgebbar ist, insbesondere ausgegeben wird, schließt bevorzugt mit der Bewegungsachse des Füllelements einen Winkel ein, der insbesondere kleiner ist als 90°, bevorzugt kleiner ist als 75°, ganz bevorzugt kleiner ist als 60° und ganz besonders bevorzugt kleiner als 50° und größer als 25° ist. Bevorzugt weist der Winkel, den die Hauptaustrittsrichtung mit der Bewegungsachse des Füllelements einschließt, einen Wert aus einem Wertebereich von 15° bis 55°, insbesondere von 30° bis 50°, auf. Durch die erfindungsgemäße Ausgestaltung der Dosiervorrichtung kann vorteilhaft einer starken Schaumbildung in dem Behälter entgegengewirkt werden. Vorteilhaft kann durch den erfindungsgemäßen geneigten Auslasskanal eine vorteilhafte Anpassung einer Füllstrahlgeschwindigkeit an eine Behältergeometrie, wie beispielsweise eine Flaschengeometrie zu einer Schaumreduktion bei gleichzeitiger hoher Abfüllleistung ermöglicht werden, da beispielsweise vorteilhaft bei einer vertikal verlaufenden Innenwand des Behälters mit großem Abstand zur Ausgabeöffnung eine hohe Füllstrahlgeschwindigkeit eingestellt werden kann und beispielsweise bei einem engen Behälterhals vorteilhaft eine niedrige Füllstrahlgeschwindigkeit eingestellt werden kann. Es kann vorteilhaft eine hohe Produktionsleistung realisiert werden, insbesondere da nicht eine zu Gunsten einer geringen Schaumbildung geringe Austragsleistung eingestellt werden muss, sondern ein Dosiervorgang vorteilhaft kontinuierlich mit einer hohen Austragsleistung durchgeführt werden kann. Ferner kann vorteilhaft eine Levelfüllung ohne kritische Beeinflussung einer aseptischen Umgebung realisiert werden. Es kann vorteilhaft eine prozesssichere Dosierung von flüssigen und/oder pastösen Produkten ermöglicht werden.

Des Weiteren wird eine Produktionsanlage, insbesondere eine Abfüllanlage, mit zumindest einer erfindungsgemäßen Dosiervorrichtung vorgeschlagen. Die Produktionsanlage kann weitere, einem Fachmann als sinnvoll erscheinende Vorrichtungen und/oder Einheiten umfassen, die zu einer Handhabung von Produkten, insbesondere von Lebensmitteln, nutzbar sind. Die Produktionsanlage ist vorzugsweise zu einer Herstellung, Abfüllung, Verpackung und/oder Umverpackung von Lebensmitteln vorgesehen. Die Produktionsanlage kann zusätzlich zur Dosiervorrichtung eine Vielzahl an weiteren Vorrichtungen und/oder Einheiten aufweisen, die ein Fachmann für sinnvoll erachtet, wie beispielsweise eine Umformvorrichtung für Verpackungen, eine Schneidvorrichtung, eine Abfüllvorrichtung, eine Sterilisationsvorrichtung, eine Verschlussvorrichtung, eine Umverpackungsvorrichtung, eine Behälterzuführvorrichtung o. dgl. Mittels der erfindungsgemäßen Ausgestaltung kann vorteilhaft eine Produktionsanlage mit einer prozesssicheren Dosierung von flüssigen und/oder pastösen Produkten ermöglicht werden. Es kann vorteilhaft eine einfache und zuverlässige Reinigungsmöglichkeit, insbesondere Außenreinigung, der Dosiereinheit ermöglicht werden. Es kann vorteilhaft eine geringe Komplexität im Aufbau der Dosiereinheit realisiert werden, die mit wenigen beweglichen Bauteilen realisierbar ist. Zudem kann vorteilhaft ein präzises Dosieren von flüssigen und/oder pastösen Produkten ermöglicht werden. Es kann vorteilhaft durch das beweglich gelagerte Füllelement eine mögliche Fallhöhe eines zu dosierenden flüssigen und/oder pastösen Produkts in einen zu befüllenden Behälter realisiert werden, da das Füllelement in den Behälter einführbar ist. Es kann vorteilhaft einer starken Schaumbildung in dem Behälter entgegengewirkt werden, insbesondere auch weiter vorteilhaft durch eine winklige Ausrichtung eines die Ausgabeöffnung bildenden Auslasskanals des Füllelements. Es kann vorteilhaft eine hohe Produktionsleistung realisiert werden, insbesondere da nicht auf ein Abklingen einer Schaumbildung gewartet werden muss oder eine zu Gunsten einer geringen Schaumbildung geringe Austragsleistung eingestellt werden muss, sondern ein Dosiervorgang vorteilhaft kontinuierlich mit einer hohen Austragsleistung durchgeführt werden kann. Zudem kann vorteilhaft infolge einer Bewegung des Füllelements, insbesondere der Ausgabeöffnung, in das Gehäuse hinein, einem Antrocknen von zu dosierenden flüssigen und/oder pastösen Produkten an dem Füllelement entgegengewirkt werden. Ferner kann vorteilhaft eine Levelfüllung ohne kritische Beeinflussung einer aseptischen Umgebung realisiert werden. Zudem kann vorteilhaft infolge eines Entfalls einer Notwendigkeit einer vertikalen Behälterbewegung ein großes Einsatzgebiet für die erfindungsgemäße Dosiervorrichtung für unterschiedliche Arten von Behältern, wie beispielsweise Flaschen, Becher, Pouches, Kanister o. dgl., ermöglicht werden. Es kann vorteilhaft eine prozesssichere Dosierung von flüssigen und/oder pastösen Produkten ermöglicht werden.

Ferner geht die Erfindung aus von einem Verfahren zu einem Betrieb einer Dosiervorrichtung, insbesondere einer erfindungsgemäßen Dosiervorrichtung. Es wird vorgeschlagen, dass in zumindest einem Verfahrensschritt zumindest ein zumindest eine Ausgabeöffnung umfassendes Füllelement einer Dosiereinheit der, insbesondere erfindungsgemäßen, Dosiervorrichtung aus einem Gehäuse der Dosiereinheit, das einen Aufnahmeraum für zumindest ein flüssiges und/oder pastöses Produkt begrenzt, herausbewegt wird, um, insbesondere durch die Ausgabeöffnung, einen Behälter mit dem flüssigen und/oder pastösen Produkt zu befüllen. Mittels der erfindungsgemäßen Ausgestaltung kann vorteilhaft eine prozesssichere Dosierung mit einer hohen Leistung realisiert werden. Es kann vorteilhaft eine einfache und zuverlässige Reinigungsmöglichkeit, insbesondere Außenreinigung, der Dosiereinheit ermöglicht werden. Zudem kann vorteilhaft ein präzises Dosieren von flüssigen und/oder pastösen Produkten ermöglicht werden. Es kann vorteilhaft durch das beweglich gelagerte Füllelement eine mögliche Fallhöhe eines zu dosierenden flüssigen und/oder pastösen Produkts in einen zu befüllenden Behälter realisiert werden, da das Füllelement in den Behälter einführbar ist. Es kann vorteilhaft einer starken Schaumbildung in dem Behälter entgegengewirkt werden, insbesondere auch weiter vorteilhaft durch eine winklige Ausrichtung eines die Ausgabeöffnung bildenden Auslasskanals des Füllelements. Es kann vorteilhaft eine hohe Produktionsleistung realisiert werden, insbesondere da nicht auf ein Abklingen einer Schaumbildung gewartet werden muss oder eine zu Gunsten einer geringen Schaumbildung geringe Austragsleistung eingestellt werden muss, sondern ein Dosiervorgang vorteilhaft kontinuierlich mit einer hohen Austragsleistung durchgeführt werden kann. Ferner kann vorteilhaft eine Levelfüllung ohne kritische Beeinflussung einer aseptischen Umgebung realisiert werden. Zudem kann vorteilhaft infolge eines Entfalls einer Notwendigkeit einer vertikalen Behälterbewegung ein großes Einsatzgebiet für die erfindungsgemäße Dosiervorrichtung für unterschiedliche Arten von Behältern, wie beispielsweise Flaschen, Becher, Pouches, Kanister o. dgl., ermöglicht werden. Es kann vorteilhaft eine prozesssichere Dosierung von flüssigen und/oder pastösen Produkten ermöglicht werden.

Des Weiteren wird vorgeschlagen, dass in zumindest einem Verfahrensschritt eine, insbesondere die bereits zuvor genannte, Zulauföffnung des Füllelements geöffnet wird, insbesondere infolge einer axialen Bewegung des Füllelements relativ zu einem, insbesondere dem bereits zuvor genannten, Führungselement der Dosiereinheit, insbesondere wobei während einer Öffnungsbewegung des Füllelements zur Öffnung der Zulauföffnung eine Verdrängung des flüssigen und/oder pastösen Produkts in Richtung der Zulauföffnung gestartet wird, insbesondere infolge eines Starts einer Hubbewegung eines Dosierkolbens einer, insbesondere der bereits zuvor genannten, Dosierpumpe der Dosiereinheit. Durch die erfindungsgemäße Ausgestaltung der Dosiervorrichtung kann vorteilhaft ein präzises Dosieren von flüssigen und/oder pastösen Produkten ermöglicht werden. Es kann vorteilhaft eine prozesssichere Dosierung von flüssigen und/oder pastösen Produkten ermöglicht werden.

Zudem wird vorgeschlagen, dass in zumindest einem Verfahrensschritt das Füllelement in Abhängigkeit von einem Füllstand des Behälters mit dem flüssigen und/oder pastösen Produkt, insbesondere kontinuierlich, in das Gehäuse hinein bewegt wird, insbesondere bis die Ausgabeöffnung vollständig in dem Gehäuse angeordnet ist. Durch die erfindungsgemäße Ausgestaltung kann vorteilhaft infolge einer Bewegung des Füllelements, insbesondere der Ausgabeöffnung, in das Gehäuse hinein, einem Antrocknen von zu dosierenden flüssigen und/oder pastösen Produkten an dem Füllelement entgegengewirkt werden. Ferner kann vorteilhaft eine Levelfüllung ohne kritische Beeinflussung einer aseptischen Umgebung realisiert werden. Es kann vorteilhaft eine prozesssichere Dosierung von flüssigen und/oder pastösen Produkten ermöglicht werden.

Die erfindungsgemäße Dosiervorrichtung, die erfindungsgemäße Produktionsanlage und/oder das erfindungsgemäße Verfahren sollen/soll hierbei nicht auf die oben beschriebene Anwendung und Ausführungsform beschränkt sein. Insbesondere können/kann die erfindungsgemäße Dosiervorrichtung, die erfindungsgemäße Produktionsanlage und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine Produktionsanlage mit zumindest einer erfindungsgemäßen Dosiervorrichtung in einer schematischen Darstellung,
- Fig. 2: eine Detailansicht der erfindungsgemäßen Dosiervorrichtung in einer schematischen Darstellung,
- Fig. 3a: eine Teilschnittansicht einer Dosiereinheit der erfindungsgemäßen Dosiervorrichtung vor einem Beginn eines Dosiervorgangs in einer schematischen Darstellung,
- Fig. 3b: eine Teilschnittansicht der Dosiereinheit der erfindungsgemäßen Dosiervorrichtung während eines Standarddosiervorgangs in einer schematischen Darstellung,
- Fig. 4a: eine Teilschnittansicht der Dosiereinheit der erfindungsgemäßen Dosiervorrichtung zu Beginn eines Leveldosiervorgangs in einer schematischen Darstellung,
- Fig. 4b: eine Teilschnittansicht der Dosiereinheit der erfindungsgemäßen Dosiervorrichtung während des Leveldosiervorgangs in einer schematischen Darstellung,
- Fig. 4c: eine Teilschnittansicht der Dosiereinheit der erfindungsgemäßen Dosiervorrichtung während einer Beendigung des Leveldosiervorgangs in einer schematischen Darstellung und
- Fig. 5: ein Ablaufdiagramm eines erfindungsgemäßen Verfahrens zu einem Betrieb einer Dosiervorrichtung in einer schematischen Darstellung

### Beschreibung des Ausführungsbeispiels

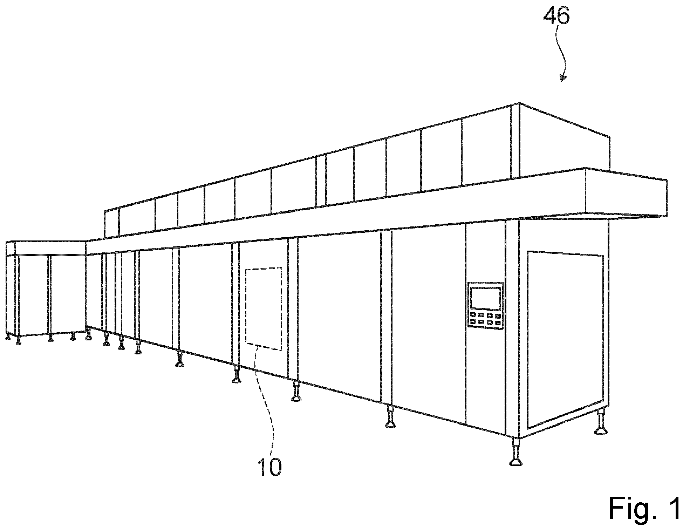

Figur 1 zeigt eine Produktionsanlage 46 mit zumindest einer Dosiervorrichtung 10 zu einem Dosieren von flüssigen oder pastösen Produkten, insbesondere Lebensmitteln. Die Produktionsanlage 46 ist vorzugsweise als eine Abfüllanlage ausgebildet. Die Produktionsanlage 46 ist bevorzugt zu einer Herstellung und/oder zu einer Verarbeitung von Produkten, insbesondere Lebensmitteln, vorgesehen. Die Produktionsanlage 46 kann beispielsweise als eine Lebensmittelverpackungsmaschine, als eine Lebensmittelabfüllmaschine, als eine Lebensmittelherstellungsmaschine, als eine Kombination der zuvor genannten Maschinen o. dgl. ausgebildet sein. Die Produktionsanlage 46 kann weitere, einem Fachmann als sinnvoll erscheinende Vorrichtungen und/oder Einheiten aufweisen, die zu einer Herstellung und/oder Verarbeitung von Produkten, insbesondere Lebensmitteln, Verwendung finden, wie beispielsweise eine Sterilisationsvorrichtung, eine Verschlussvorrichtung, eine Umverpackungsvorrichtung, eine Behälterzuführvorrichtung o. dgl.

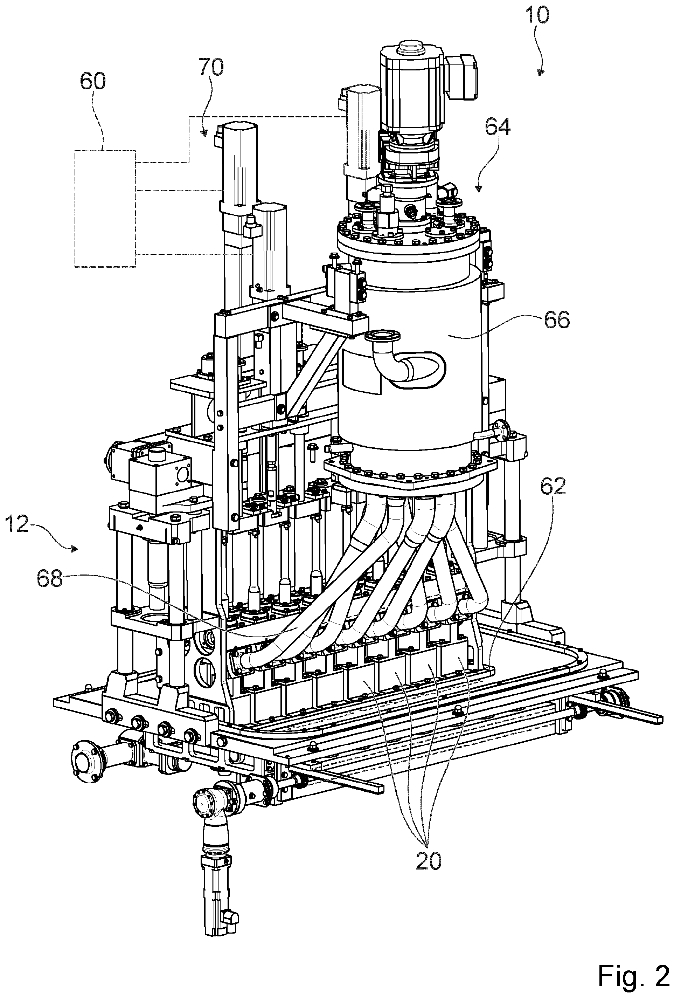

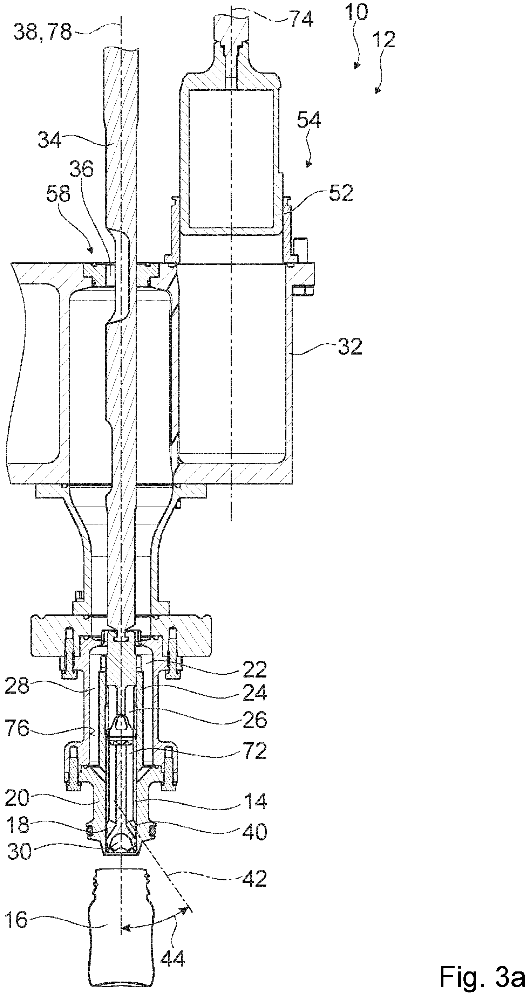

Figur 2 zeigt eine Detailansicht der Dosiervorrichtung 10 zu einem Dosieren von flüssigen oder pastösen Produkten, insbesondere Lebensmitteln, in Behälter 16 (vgl. Figuren 3a bis 4c), wie beispielsweise Flaschen, Becher, Pouches, Kanister o. dgl. Die Dosiervorrichtung 10 umfasst zumindest eine Dosiereinheit 12, vorzugsweise eine Vielzahl von Dosiereinheiten 12. Bei einer hierin aufgeführten Beschreibung einer einzelnen der Dosiereinheiten 12 bezieht sich diese Beschreibung bevorzugt auf alle Dosiereinheiten 12. Die Dosiereinheit 12 weist zumindest eine Dosierpumpe 54 zu einer Förderung der flüssigen und/oder pastösen Produkte auf. Die Dosierpumpe 54 umfasst zumindest eine Saugseite und zumindest eine Druckseite. Ferner umfasst die Dosiereinheit 12 bevorzugt zumindest ein Umschaltventil 58 zu einem Umschalten zwischen einem Ansaugen und einem Ausstoßen (vgl. Figuren 3a bis 4c). Ferner umfasst die Dosiervorrichtung 10 bevorzugt eine Recheneinheit 60. Die Recheneinheit 60 ist zumindest zu einer Steuerung und/oder Regelung der Dosiereinheit 12 vorgesehen.

In dem hier beschriebenen Ausführungsbeispiel umfasst die Dosiervorrichtung 10 beispielhaft acht Dosiereinheiten 12. Es ist jedoch auch denkbar, dass die Dosiervorrichtung 10 eine andere, einem Fachmann als sinnvoll erscheinende Anzahl an Dosiereinheiten 12 umfasst, insbesondere eine für einen spezifischen Einsatzbereich der Dosiervorrichtung 10 sinnvolle Anzahl. Vorzugsweise sind die Dosiereinheiten 12, insbesondere fluchtend zueinander, in einer Reihe an einem Grundelement 62 der Dosiervorrichtung 10 angeordnet (vgl. Figur 2). Die Dosiereinheiten 12 sind vorzugsweise mittels einer form- und/oder kraftschlüssigen Verbindung, wie beispielsweise mittels einer Schraubverbindung, einer Klemmverbindung, einer Rastverbindung o. dgl., an dem Grundelement 62 fixiert, insbesondere einzeln an dem Grundelement 62 fixiert. Bevorzugt umfasst das Grundelement 62 zumindest einen Durchbruch zu einer Durchführung von, insbesondere Dosierdüsen der Dosiereinheiten 12 bildenden, Gehäusen 20 (vgl. Figuren 3a bis 4c) der Dosiereinheiten 12. Die Gehäuse 20 der Dosiereinheiten 12 sind vorzugsweise einzeln austauschbar an der jeweiligen Dosiereinheit 12 fixiert. Das Grundelement 62 weist in dem hier dargestellten Ausführungsbeispiel eine Vielzahl an Einzeldurchbrüchen auf, wobei jedem Einzeldurchbruch ein einzelnes Gehäuse 20 einer einzelnen Dosiereinheit 12 zugeordnet ist. Es ist jedoch auch denkbar, dass das Grundelement 62 einen, insbesondere zentralen, Durchbruch aufweist, dem mehrere, insbesondere alle, Gehäuse 20 der Dosiereinheiten 12 zugeordnet sind, insbesondere durch den sich alle Gehäuse 20 der Dosiereinheiten 12 hindurch erstrecken. Die Gehäuse 20 der Dosiereinheit 12 können alle eine identische Ausgestaltung aufweisen oder unterschiedlich ausgebildet sein.

Die Dosiervorrichtung 10 umfasst vorzugsweise zumindest eine Tankeinheit 64, die zumindest ein Tankelement 66 aufweist, in dem die oder das flüssige/n und/oder pastöse/n Produkt/e anordenbar sind. An der Tankeinheit 64 ist bevorzugt auf eine, einem Fachmann bereits bekannte Art und Weise eine Mischereinheit angeordnet. Die Dosiereinheiten 12 sind vorzugsweise einzeln über, insbesondere individuelle, Zuführleitungen 68 der Dosiervorrichtung 10 mit dem Tankelement 66 verbunden. Denkbar ist auch, dass die Tankeinheit 64 eine Vielzahl an Tankelementen 66 umfasst, wobei in den einzelnen Tankelementen 66 unterschiedliche Produkte anordenbar sind, die mittels der Dosiereinheiten 12 in Behälter förderbar sind, um mehrschichtige Produkte oder Produkte mit unterschiedlichen Bestandteilen zu ermöglichen, wie beispielsweise einen Pudding mit Sahnehaube, der in einem Becher abgefüllt ist o. dgl. Bei einer Ausgestaltung der Tankeinheit 64 mit einer Vielzahl an Tankelementen 66 ist bevorzugt jeder Dosiereinheit 12 ein einzelnes Tankelement 66 der Tankeinheit 64 zugeordnet. Ferner ist auch denkbar, dass die Dosiereinheiten 12 individuell oder gemeinsam über ein Rohrleitungssystem der Produktionsanlage 46 mit Produkten versorgbar sind und die Produkte in entfernten Silos o. dgl. gelagert sind. Weitere, einem Fachmann als sinnvoll erscheinende Ausgestaltungen und/oder Aufteilungen der Tankeinheit 64 und der Dosiereinheiten 12 sind ebenfalls denkbar.

Ferner weist die Dosiervorrichtung 10 eine Antriebseinheit 70 auf. Die Antriebseinheit 70 umfasst vorzugsweise eine Vielzahl an Antrieben zu einem Antrieb der Dosiereinheiten 12. Die Antriebe können als elektrische Antriebe, als hydraulische Antriebe, als pneumatische Antriebe oder als sonstige, einem Fachmann als sinnvoll erscheinende Antriebe ausgebildet sein. Die Antriebe sind vorzugsweise als Servoantriebe ausgebildet. In dem in den Figuren dargestellten Ausführungsbeispiel umfasst die Antriebseinheit 70 vier Antriebe, wobei zwei Antriebe zu einem Kolbenantrieb der Dosiereinheiten 12, insbesondere der Dosierpumpen 54 der Dosiereinheiten 12, vorgesehen sind und zwei Antriebe zu einem Ventilantrieb der Dosiereinheiten 12, insbesondere der Umschaltventile 58 der Dosiereinheiten 12, vorgesehen sind. Es ist jedoch auch denkbar, dass die Antriebseinheit 70 pro Kolben und pro Umschaltventil 58 jeweils einen Einzelantrieb umfasst. Die Antriebseinheit 70 umfasst vorzugsweise pro Antrieb ein Kupplungselement, wobei das jeweilige Kupplungselement vier Antriebselemente, insbesondere Antriebswellen, der Dosiereinheiten 12 miteinander verbindet. Bevorzugt sind vier Kolbenantriebswellen der Dosiereinheiten 12 pro Antrieb und vier Ventilantriebswellen der Dosiereinheiten 12 pro Antrieb über jeweils eines der Kupplungselemente antriebstechnisch miteinander verbunden. Es ist jedoch auch denkbar, dass pro Kolbenantriebswelle und pro Ventilantriebswelle ein Einzelantrieb der Antriebseinheit 70 vorgesehen ist, um einen Einzelantrieb der jeweiligen Kolbenantriebswelle und der jeweiligen Ventilantriebswelle zu realisieren. Die Ventilantriebswellen sind jeweils dazu vorgesehen, einen, insbesondere als Verschlusselement 34 ausgebildeten, Ventilschieber eines der Umschaltventile 58, insbesondere axial, zu bewegen. Die Kolbenantriebswellen sind jeweils dazu vorgesehen, eine Kolbenstange einer der Dosierpumpen 14 axial zu bewegen.

Figur 3a zeigt eine Teilschnittansicht der Dosiereinheit 12 vor einem Beginn eines Dosiervorgangs, insbesondere in einer Grundstellung der Dosiereinheit 12. Die Dosiereinheit 12 umfasst zumindest ein beweglich gelagertes Füllelement 14, insbesondere ein Füllrohr, das zu einem Befüllen zumindest eines Behälters 16 mit einem flüssigen und/oder pastösen Produkt zumindest eine Ausgabeöffnung 18 aufweist, und zumindest das Gehäuse 20, insbesondere ein Ventilgehäuse, das einen Aufnahmeraum 22 für das flüssige und/oder pastöse Produkt begrenzt. Das Füllelement 14 umfasst vorzugsweise einen Innenkanal 72 oder mehrere Innenkanäle 72 zu einer Führung des zu dosierenden flüssigen und/oder pastösen Produkts, der oder die vorzugsweise fluidtechnisch mit der Ausgabeöffnung 18 zusammenwirken, insbesondere direkt an die Ausgabeöffnung 18 angrenzt/angrenzen. Das Füllelement 14 kann eine einzelne Ausgabeöffnung 18 oder eine Vielzahl an Ausgabeöffnungen 18 aufweisen. Bevorzugt ist/sind die Ausgabeöffnung/en 18 an einer Mantelfläche des Füllelements 14 angeordnet.

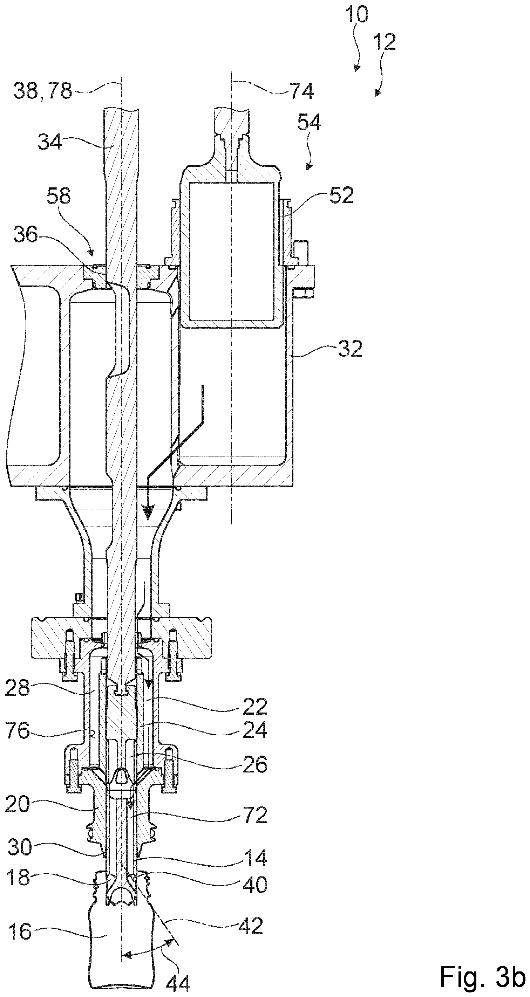

Das Füllelement 14 ist in dem Gehäuse 20 beweglich gelagert. Das Füllelement 14 ist vorzugsweise translatorisch beweglich im Gehäuse 20 gelagert. Eine Bewegungsachse 38 des Füllelements 14 verläuft bevorzugt zumindest im Wesentlichen parallel zu einer Längsachse des Gehäuses 20 und/oder zu einer Bewegungsachse 74 eines Dosierkolbens 52 der Dosierpumpe 54. Bevorzugt verläuft die Bewegungsachse 38 des Füllelements 14 zumindest im Wesentlichen parallel zu einer Vertikalachse. Bevorzugt ist das Füllelement 14 derart beweglich in dem Gehäuse 20 gelagert, dass zumindest die Ausgabeöffnung 18 infolge einer Bewegung des Füllelements 14 relativ zum Gehäuse 20 aus dem Gehäuse 20 herausbewegbar ist (vgl. Figuren 3b bis 4c). Das Gehäuse 20 kann getrennt zu einem Pumpengehäuse 32 der Dosierpumpe 54 angeordnet oder ausgebildet sein und fluidtechnisch mit diesem verbunden sein oder das Gehäuse 20 kann direkt angrenzend an dem Pumpengehäuse 32 angeordnet sein, insbesondere derart, dass das Pumpengehäuse 32 und das Gehäuse 20 zusammen den Aufnahmeraum 22 für das flüssige und/oder pastöse Produkt begrenzen, wie dies insbesondere in dem in den Figuren dargestellten Ausführungsbeispiel der Fall ist.

Vorzugsweise umfasst die Dosiereinheit 12 zumindest das, insbesondere in dem Pumpengehäuse 32 der Dosierpumpe 54 der Dosiereinheit 12, beweglich gelagerte Verschlusselement 34, insbesondere Ventilschieber, zu einem Öffnen oder Schließen einer Produktzuführöffnung 36 der Dosiereinheit 12, wobei das Füllelement 14 mit dem Verschlusselement 34 bewegungsgekoppelt ist, insbesondere mittels einer formschlüssigen Verbindung mit dem Verschlusselement 34 verbunden ist. Vorzugsweise ist das Füllelement 14, insbesondere mit einem der Ausgabeöffnung 18 abgewandten und/oder der Dosierpumpe 54 zugewandten Ende des Füllelements 14, über eine formschlüssige Verbindung, wie beispielsweise einer Spundung, einer Schwalbenschwanzverbindung o. dgl., mit dem Verschlusselement 34 verbunden. Denkbar ist auch, dass das Füllelement 14 einteilig mit dem Verschlusselement 34 ausgebildet ist. Eine Bewegungsachse 78 des Verschlusselements 34 verläuft bevorzugt zumindest im Wesentlichen parallel, ganz besonders bevorzugt koaxial, zur Bewegungsachse 38 des Füllelements 14. Bevorzugt ist das Verschlusselement 34 als Ventilschieber des Umschaltventils 58 zu einem Umschalten zwischen einem Ansaugen und einem Ausstoßen ausgebildet. Das Füllelement 14 und das Verschlusselement 34 sind vorzugsweise derart miteinander bewegungsgekoppelt, dass eine synchrone Bewegung des Füllelements 14 und des Verschlusselements 34 erfolgen kann, insbesondere erfolgt. Die Produktzuführöffnung 36 ist vorzugsweise auf eine, einem Fachmann bereits bekannte Art und Weise fluidtechnisch mit der Zuführleitung 68 verbunden.

Die Dosiereinheit 12 umfasst bevorzugt zumindest ein im Gehäuse 20 angeordnetes Führungselement 24 zumindest zu einer Führung einer, insbesondere translatorischen, Bewegung des Füllelements 14, das, insbesondere dichtend, mit zumindest einer zumindest eine Zulauföffnung 26 des Füllelements 14 begrenzenden Außenseite und/oder Kante des Füllelements 14, insbesondere in Abhängigkeit von einer axialen Position des Füllelements 14 relativ zum Führungselement 24, zusammenwirkt. Vorzugsweise ist die Zulauföffnung 26 über den Innenkanal 72/die Innenkanäle 72 mit der Ausgabeöffnung 18 verbunden. Bevorzugt erstreckt/erstrecken sich der Innenkanal 72/die Innenkanäle 72 ausgehend von der Zulauföffnung 26 bis hin zur Ausgabeöffnung 18. Die Ausgabeöffnung 18 ist vorzugsweise an einem Ende des Füllelements 14 angeordnet, insbesondere an einem dem Führungselement 24 und/oder der Dosierpumpe 54 abgewandten Ende des Füllelements 14. Das Führungselement 24 ist bevorzugt als Linearführungselement ausgebildet. Vorzugsweise ist das Führungselement 24 an einer Innenwand 76 des Gehäuses 20 angeordnet, insbesondere einteilig mit der Innenwand 76 ausgebildet. Das Führungselement 24 ist bevorzugt dazu vorgesehen, in Abhängigkeit von einer axialen Position des Füllelements 14 relativ zum Führungselement 24, die Zulauföffnung 26 des Füllelements 14 zu öffnen oder zu schließen (vgl. Figuren 3a bis 4c). Vorzugsweise überdeckt das Führungselement 24 in zumindest einer axialen Position des Füllelements 14 relativ zum Führungselement 24 die Zulauföffnung 26 vollständig (vgl. Figur 3a). Bevorzugt überdeckt das Führungselement 24 die Zulauföffnung 26 vollständig in zumindest einer axialen Position des Füllelements 14 relativ zum Führungselement 24, in der die Ausgabeöffnung 18, insbesondere vollständig, innerhalb des Gehäuses 20 angeordnet ist (vgl. Figur 3a).

Vorzugsweise umfasst die Dosiereinheit 12 zumindest das im Gehäuse 20 angeordnete Führungselement 24 zumindest zu einer Führung einer, insbesondere translatorischen, Bewegung des Füllelements 14, wobei das Gehäuse 20 zwischen der Innenwand 76 des Gehäuses 20 und dem Führungselement 24 zumindest einen Kanal 28 aufweist, der, insbesondere in Abhängigkeit von einer axialen Position des Füllelements 14 relativ zum Führungselement 24, zu einer Zuführung des flüssigen und/oder pastösen Produkts zur Zulauföffnung 26 des Füllelements 14 vorgesehen ist. Bevorzugt ist infolge einer translatorischen Bewegung des Füllelements 14 relativ zum Führungselement 24 die Zulauföffnung 26 aus dem Führungselement 24 heraus bewegbar, insbesondere um eine Zuführung des flüssigen und/oder pastösen Produkts durch den Kanal 28 zur Zulauföffnung 26 zu realisieren (vgl. Figuren 3b bis 4b; Pfeile für schematische Darstellung eines Produktflusses ausgehend von der Dosierpumpe 54 bis zur Zulauföffnung 26).

Das Gehäuse 20 weist bevorzugt zumindest eine Durchführöffnung 30 auf, durch die das Füllelement 14 derart aus dem Gehäuse 20 herausbewegbar ist, dass zumindest die Ausgabeöffnung 18 des Füllelements 14 außerhalb des Aufnahmeraums 22 anordenbar ist, insbesondere angeordnet ist (vgl. Figuren 3b bis 4c). Vorzugsweise wirkt ein die Durchführöffnung 30 begrenzender Teilbereich des Gehäuses 20 dichtend mit einer Außenseite und/oder Kante des Füllelements 14, insbesondere in Abhängigkeit von einer axialen Position des Füllelements 14 relativ zur Durchführöffnung 30, zusammen. Die Durchführöffnung 30 ist vorzugsweise an einer, insbesondere der Produktzuführöffnung 36 der Dosiereinheit 12 und/oder dem Pumpengehäuse 32 abgewandten, Unterseite des Gehäuses 20 angeordnet. Bevorzugt ist die Durchführöffnung 30 an einer dem Führungselement 24 abgewandten Seite des Gehäuses 20 angeordnet. Das Füllelement 14 ist vorzugsweise durch die Durchführöffnung 30 in einen zu befüllenden Behälter 16 bewegbar, insbesondere derart, dass zumindest die Ausgabeöffnung 18 des Füllelements 14 außerhalb des Aufnahmeraums 22 und innerhalb eines Behälters 16 anordenbar ist, insbesondere angeordnet ist (vgl. Figuren 3b bis 4c).

Bevorzugt wird die infolge einer Bewegung des Füllelements 14 aus dem Gehäuse 20 herausbewegbare Ausgabeöffnung 18 des Füllelements 14 durch einen relativ zur Bewegungsachse 38 des Füllelements 14 geneigten Auslasskanal 40 des Füllelements 14 gebildet, wobei insbesondere dessen Mittelachse 42 einen von 90° und 180° verschiedenen Winkel 44 mit der Bewegungsachse 38 des Füllelements 14 einschließt (vgl. Figuren 3b bis 4b). Die Mittelachse 42 des Auslasskanals 40 schließt vorzugsweise mit der Bewegungsachse 38 des Füllelements 14 einen Winkel 44 ein, der insbesondere kleiner ist als 90°, bevorzugt kleiner ist als 75° und ganz bevorzugt kleiner ist als 60°. Bevorzugt weist der Winkel 44, den die Mittelachse 42 des Auslasskanals 40 mit der Bewegungsachse 38 des Füllelements 14 einschließt, einen Wert aus einem Wertebereich von 15° bis 55°, insbesondere von 30° bis 50°, auf. Eine Hauptaustrittsrichtung eines zu dosierenden flüssigen und/oder pastösen Produkts, das durch die Ausgabeöffnung 18 ausgebbar ist, insbesondere ausgegeben wird, schließt bevorzugt mit der Bewegungsachse 38 des Füllelements 14 einen Winkel ein, der insbesondere kleiner ist als 90°, bevorzugt kleiner ist als 75°, ganz bevorzugt kleiner ist als 60° und ganz besonders bevorzugt kleiner als 50° und größer als 25° ist. Bevorzugt weist der Winkel, den die Hauptaustrittsrichtung mit der Bewegungsachse 38 des Füllelements 14 einschließt, einen Wert aus einem Wertebereich von 15° bis 55°, insbesondere von 30° bis 50°, auf.

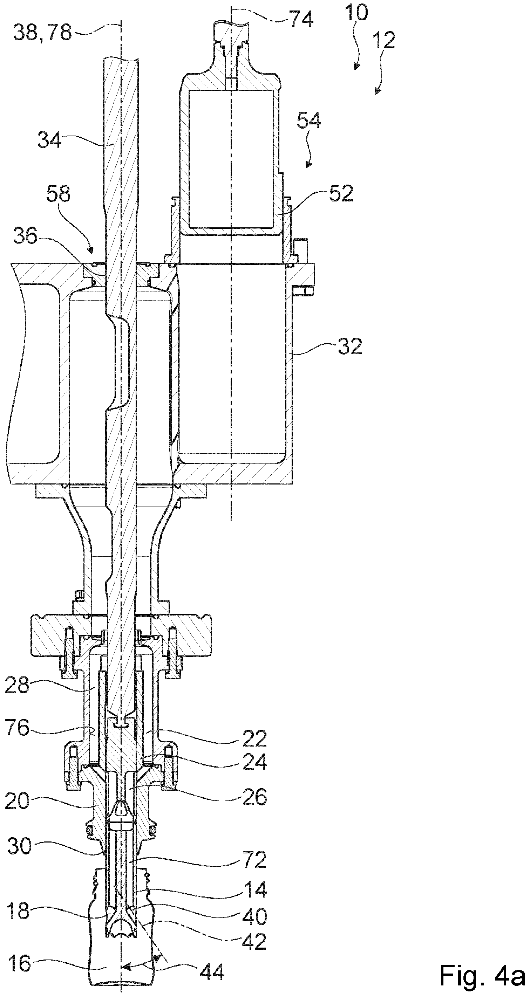

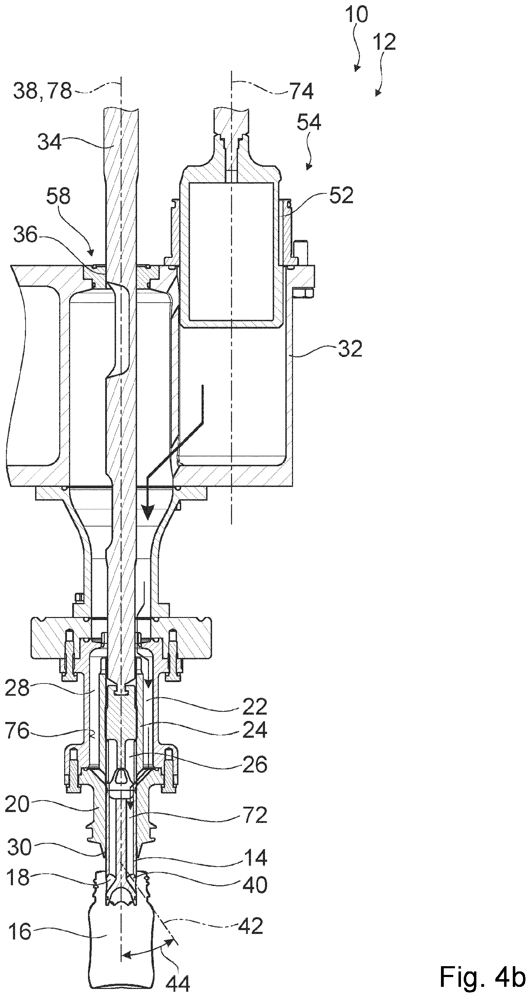

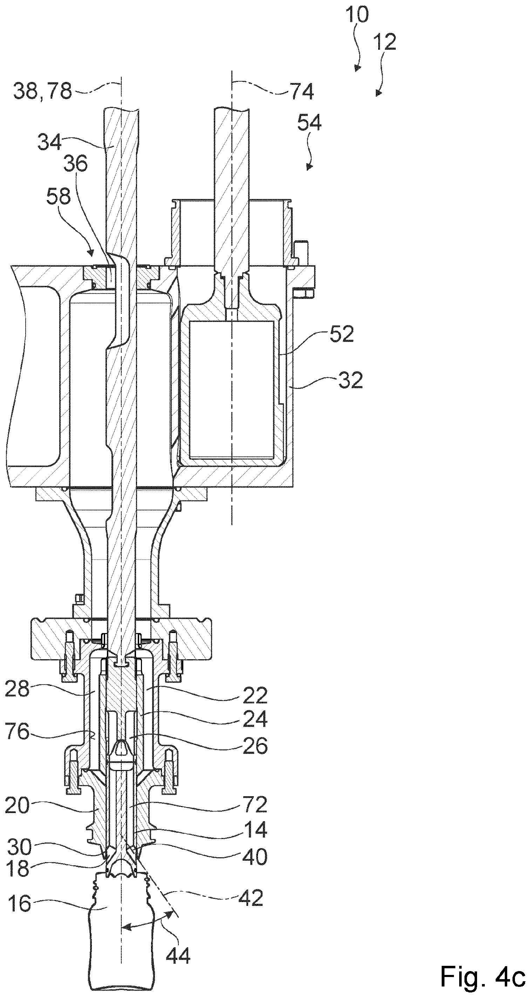

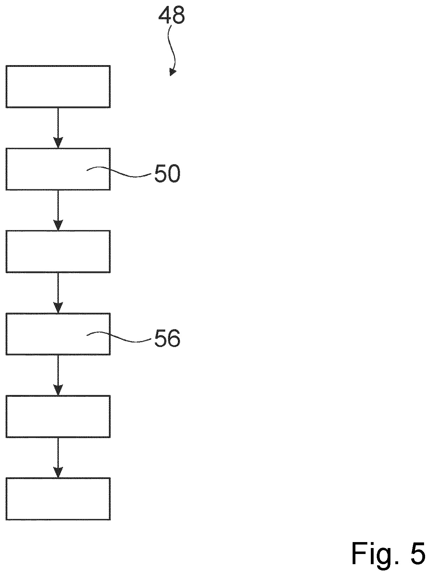

Figur 5 zeigt ein schematisches Ablaufdiagramm eines Verfahrens 48 zu einem Betrieb der Dosiervorrichtung 10. Die Dosiervorrichtung 10 ist vorzugsweise zu einem Durchführen eines Standarddosiervorgangs (vgl. Figuren 3a und 3b) und zu einem Durchführen eines Leveldosiervorgangs (vgl. Figuren 4a bis 4c) betreibbar. Bei einem Standarddosiervorgang ist das Füllelement 14 bevorzugt während eines Dosierens in einer fixen Position relativ zu einem zu befüllenden Behälter 16 in dem Behälter 16 angeordnet, während das Füllelement 14 bei einem Leveldosiervorgang bevorzugt mit einem Erhöhen eines Füllstands eines zu befüllenden Behälters 16, insbesondere kontinuierlich, aus dem Behälter 16 bewegt wird.

Zu Beginn eines Dosiervorgangs, insbesondere Standarddosiervorgangs und Leveldosiervorgangs, wird das zumindest eine Ausgabeöffnung 18 umfassende Füllelement 14 ausgehend von einer geschlossenen Stellung, insbesondere einer Grundstellung, der Dosiereinheit 12 (vgl. Figur 3a) in zumindest einem Verfahrensschritt 50 des Verfahrens 48 aus dem Gehäuse 20 der Dosiereinheit 12, das den Aufnahmeraum 22 für zumindest ein flüssiges und/oder pastöses Produkt begrenzt, herausbewegt, vorzugsweise in einen Behälter 16 hinein bewegt, um den Behälter 16 mit dem flüssigen und/oder pastösen Produkt zu befüllen (vgl. Figuren 3b und 4a). Beim Standarddosiervorgang wird das Füllelement 14 vorzugsweise weniger als 80 %, bevorzugt weniger als 50 % und ganz besonders bevorzugt weniger als 40 % einer maximalen Bewegungsstrecke des Füllelements 14 relativ zum Gehäuse 20, vorzugsweise in den Behälter 16, bewegt (vgl. Figur 3b). Beim Leveldosiervorgang wird das Füllelement 14 vorzugsweise mehr als 40 %, bevorzugt mehr als 60 % und ganz besonders bevorzugt mehr als 90 % der maximalen Bewegungsstrecke des Füllelements 14 relativ zum Gehäuse 20, vorzugsweises in den Behälter 16, bewegt (vgl. Figur 4a). Bevorzugt wird beim Leveldosiervorgang das Füllelement 16 maximal relativ zum Gehäuse 20 bewegt, bis die Zulauföffnung 26 gerade noch im Gehäuse 20, insbesondere innerhalb des die Durchführöffnung 30 begrenzenden Teilbereichs des Gehäuses 20, angeordnet ist, insbesondere um eine Zuführung eines zu dosierenden flüssigen und/oder pastösen Produkts auch in einer maximal aus dem Gehäuse 20 ausgefahrenen Position des Füllelements 14 zu ermöglichen. Es ist jedoch auch denkbar, dass das Füllelement 14 beim Standarddosiervorgang und/oder beim Leveldosiervorgang entlang eines anderen, einem Fachmann als sinnvoll erscheinenden Anteils einer maximalen Bewegungsstrecke des Füllelements 14 relativ zum Gehäuse 20 bewegt wird, um einen Dosiervorgang durchzuführen.

Bevorzugt wird in dem zumindest einen Verfahrensschritt 50 die Zulauföffnung 26 des Füllelements 14 geöffnet, insbesondere infolge einer axialen Bewegung des Füllelements 14 relativ zum Führungselement 24 (vgl. Figuren 3b und 4a). Vorzugsweise wird, insbesondere in dem zumindest einen Verfahrensschritt 50 oder in einem weiteren Verfahrensschritt des Verfahrens 48, während einer Öffnungsbewegung des Füllelements 14 zur Öffnung der Zulauföffnung 26 eine Verdrängung des flüssigen und/oder pastösen Produkts in Richtung der Zulauföffnung 26 gestartet, insbesondere infolge eines Starts einer Hubbewegung des Dosierkolbens 52 der Dosierpumpe 54 der Dosiereinheit 12.

Vorzugsweise wird in zumindest einem Verfahrensschritt 56 des Verfahrens 48, insbesondere beim Leveldosiervorgang, das Füllelement 14 in Abhängigkeit von einem Füllstand des Behälters 16 mit dem flüssigen und/oder pastösen Produkt, insbesondere kontinuierlich, in das Gehäuse 20 hinein, insbesondere aus dem Behälter 16 heraus, bewegt, während aus der Ausgabeöffnung 18 noch das flüssige und/oder pastöse Produkt in den Behälter 16 dosiert wird, vorzugsweise bis die gewünschte Füllmenge im Behälter 16 erreicht ist. Nach einem Erreichen einer gewünschten Füllmenge des Behälters 16 wird das Füllelement 14 bevorzugt aus dem Behälter 16 heraus in das Gehäuse 20 bewegt, insbesondere bis die Ausgabeöffnung 18 wieder vollständig in dem Gehäuse 20 angeordnet ist. Das Verfahren 48 zum Betrieb der Dosiervorrichtung 10 kann weitere, einem Fachmann als sinnvoll erscheinende Verfahrensschritte aufweisen. Zudem sollen auch mögliche Verfahrensschritte, die sich aus der Beschreibung der Figuren 1 bis 4c ableiten lassen, für das Verfahren 48 als offenbart gelten.

## Patentansprüche

1. Dosiervorrichtung zu einer Dosierung von flüssigen und/oder pastösen Produkten, insbesondere Lebensmitteln, mit zumindest einer Dosiereinheit (12), die zumindest ein beweglich gelagertes Füllelement (14), insbesondere Füllrohr, das zu einem Befüllen zumindest eines Behälters (16) mit einem flüssigen und/oder pastösen Produkt zumindest eine Ausgabeöffnung (18) aufweist, und die zumindest ein Gehäuse (20), insbesondere Ventilgehäuse, umfasst, das einen Aufnahmeraum (22) für das flüssige und/oder pastöse Produkt begrenzt, **dadurch gekennzeichnet, dass** das Füllelement (14) in dem Gehäuse (20) beweglich gelagert ist.

2. Dosiervorrichtung nach Anspruch 1, **dadurch gekennzeichnet, dass** die Dosiereinheit (12) zumindest ein im Gehäuse (20) angeordnetes Führungselement (24) zumindest zu einer Führung einer, insbesondere translatorischen, Bewegung des Füllelements (14) aufweist, das, insbesondere dichtend, mit zumindest einer zumindest eine Zulauföffnung (26) des Füllelements (14) begrenzenden Außenseite und/oder Kante des Füllelements (14), insbesondere in Abhängigkeit von einer axialen Position des Füllelements (14) relativ zum Führungselement (24), zusammenwirkt.

3. Dosiervorrichtung nach Anspruch 1 oder 2, **dadurch gekennzeichnet, dass** die Dosiereinheit (12) zumindest ein im Gehäuse (20) angeordnetes Führungselement (24) zumindest zu einer Führung einer, insbesondere translatorischen, Bewegung des Füllelements (14) aufweist, wobei das Gehäuse (20) zwischen einer Innenwand des Gehäuses (20) und dem Führungselement (24) zumindest einen Kanal (28) aufweist, der, insbesondere in Abhängigkeit von einer axialen Position des Füllelements (14) relativ zum Führungselement (24), zu einer Zuführung des flüssigen und/oder pastösen Produkts zu einer Zulauföffnung (26) des Füllelements (14) vorgesehen ist.

4. Dosiervorrichtung nach einem der vorhergehenden Ansprüche, **dadurch gekennzeichnet, dass** das Gehäuse (20) zumindest eine Durchführöffnung (30) aufweist, durch die das Füllelement (14) derart aus dem Gehäuse (20) herausbewegbar ist, dass zumindest die Ausgabeöffnung (18) des Füllelements (14) außerhalb des Aufnahmeraums (22) angeordnet ist, insbesondere wobei ein die Durchführöffnung (30) begrenzender Teilbereich des Gehäuses (20) dichtend mit einer Außenseite und/oder Kante des Füllelements (14), insbesondere in Abhängigkeit von einer axialen Position des Füllelements (14) relativ zur Durchführöffnung (30), zusammenwirkt.

5. Dosiervorrichtung nach einem der vorhergehenden Ansprüche, **dadurch gekennzeichnet, dass** die Dosiereinheit (12) zumindest ein, insbesondere in einem Pumpengehäuse (32) der Dosiereinheit (12), beweglich gelagertes Verschlusselement (34), insbesondere Ventilschieber, zu einem Öffnen oder Schließen einer Produktzuführöffnung (36) der Dosiereinheit (12) aufweist, wobei das Füllelement (14) mit dem Verschlusselement (34) bewegungsgekoppelt ist, insbesondere mittels einer formschlüssigen Verbindung mit dem Verschlusselement (34) verbunden ist.

6. Dosiervorrichtung nach einem der vorhergehenden Ansprüche, **dadurch gekennzeichnet, dass** die infolge einer Bewegung des Füllelements (14) aus dem Gehäuse (20) herausbewegbare Ausgabeöffnung (18) des Füllelements (14) durch einen relativ zu einer Bewegungsachse (38) des Füllelements (14) geneigten Auslasskanal (40) des Füllelements (14) gebildet wird, wobei insbesondere dessen Mittelachse (42) einen von 90° und 180° verschiedenen Winkel (44) mit der Bewegungsachse (38) des Füllelements (14) einschließt.

7. Produktionsanlage, insbesondere Abfüllanlage, mit zumindest einer Dosiervorrichtung nach einem der vorhergehenden Ansprüche.

8. Verfahren zu einem Betrieb einer Dosiervorrichtung, insbesondere einer Dosiervorrichtung nach einem der Ansprüche 1 bis 6, **dadurch gekennzeichnet, dass** in zumindest einem Verfahrensschritt (50) zumindest ein zumindest eine Ausgabeöffnung (18) umfassendes Füllelement (14) einer Dosiereinheit (12) der Dosiervorrichtung aus einem Gehäuse (20) der Dosiereinheit (12), das einen Aufnahmeraum (22) für zumindest ein flüssiges und/oder pastöses Produkt begrenzt, herausbewegt wird, um einen Behälter (16) mit dem flüssigen und/oder pastösen Produkt zu befüllen.

9. Verfahren nach Anspruch 8, **dadurch gekennzeichnet, dass** in zumindest einem Verfahrensschritt (50) eine Zulauföffnung (26) des Füllelements (14) geöffnet wird, insbesondere infolge einer axialen Bewegung des Füllelements (14) relativ zu einem Führungselement (24) der Dosiereinheit (12), insbesondere wobei während einer Öffnungsbewegung des Füllelements (14) zur Öffnung der Zulauföffnung (26) eine Verdrängung des flüssigen und/oder pastösen Produkts in Richtung der Zulauföffnung (26) gestartet wird, insbesondere infolge eines Starts einer Hubbewegung eines Dosierkolbens (52) einer Dosierpumpe (54) der Dosiereinheit (12).

10. Verfahren nach Anspruch 9, **dadurch gekennzeichnet, dass** in zumindest einem Verfahrensschritt (56) das Füllelement (14) in Abhängigkeit von einem Füllstand des Behälters (16) mit dem flüssigen und/oder pastösen Produkt, insbesondere kontinuierlich, in das Gehäuse (20) hinein bewegt wird, insbesondere bis die Ausgabeöffnung (18) vollständig in dem Gehäuse (20) angeordnet ist.
